# DEMANDE DE BREVET EUROPEEN

(11) **EP 1 258 963 A1**
(43) Date de publication de la demande: **20.11.2002**
(21) Numéro de dépôt: 02364023.8
(22) Date de dépôt: 14.05.2002
(51) Int. Cl.: H02G 3/30

(54) **Dispositif pour fixer des câbles et tous objets filiformes ou longiformes à un support même non plan**

(30) Priorité: 17.05.2001 FR 0106499
(71) Demandeur: Boitard, Jean-Pierre, 14920 Mathieu (FR); Fabre, Patrick, 14550 Blainville le Parc (FR); Duval Lebret, Benoit, 14880 Colleville-Montgomery (FR)
(72) Inventeur: Boitard, Jean-Pierre, 14920 Mathieu (FR); Fabre, Patrick, 14550 Blainville le Parc (FR); Duval Lebret, Benoit, 14880 Colleville-Montgomery (FR)

(57) **Abrégé**

Dispositif pour fixer des câbles et tous objets filiformes ou longiformes à un support même non plan.

L'invention concerne un dispositif constitués de modules de différentes longueurs et largeurs, fixés à intervalles sur les surfaces à équiper, et permettant la pose rapide de parcours de câbles et leur modification ultérieure aisée en tant que de besoin.

Les modules sont constitués de deux bandes de textile auto-agrippant (2) (3) solidarisées entre elles (5). L'une des deux bandes (3) est fixée au sur support sur lequel les câbles sont à apposer par collage ou tout autre procédé.

Les câbles ou objets sont disposés transversalement sur la bande (3) sur laquelle vient s'appliquer ensuite la bande (2). La fixation est assurée par l'auto-adhérence des deux bandes (2) (3) dans les espaces laissés libres entre les câbles ou objets.

Le dispositif selon l'invention est particulièrement destiné à la fixation des câbles électriques de basse tension, des câbles téléphoniques et de transmissions de données informatiques aux parois de locaux et meubles de bureau, depuis leurs raccordements aux réseaux fixes jusqu'aux machines et matériels de bureau qu'ils alimentent.

## Description

La présente invention concerne un dispositif permettant la fixation avec ou sans percements, sur toute surface, même non plane, des câbles d'alimentation en électricité de basse tension, des câbles téléphoniques, des câbles de transmission de données informatiques et en particulier, mais non exclusivement, leur fixation sur les faces inférieures et latérales des meubles de bureau, ainsi que sur les cloisons des locaux.

Ce dispositif permet également la fixation de tous autres objets longiformes. Il permet aussi la modification aisée, en tant que besoin, du parcours des câbles, depuis leurs sources d'alimentation jusqu'aux matériels et machines qu'ils alimentent lorsque l'implantation de celles-ci vient à être modifiée ou qu'elles doivent être remplacées.

En l'état actuel:
- Soit ces câbles sont disposés directement sur le sol et le long des parois, sans aucune fixations depuis leurs raccordements aux réseaux fixes jusqu'aux machines et matériels qu'ils alimentent:
   dans ce cas ils présentent un réel danger:
      / pour la sécurité des personnes.
      / pour la sécurité des matériels auxquels ils sont reliés.
- Soit les câbles sont disposés dans des goulottes ou chemins de câbles en métal ou matériaux plastiques, fixés aux meubles ou aux parois des locaux.
   dans ce cas, même si la sécurité des personnes et des matériels est mieux assurée:
      / la fixation des goulottes ou chemins de câble nécessite des percements, détériorant irréversiblement les meubles ou parois auxquels elles sont fixées.
      / elles ne permettent qu'un parcours unidirectionnel des câbles.
      / elles ne peuvent être efficacement fixées que sur des surfaces planes
      / elles nécessitent un démontage et une nouvelle fixation lorsqu'il est nécessaire de modifier le parcours des câbles.
      / pour être correctement disposés dans les goulottes ou chemins de câbles, les câbles doivent être de l'exacte longueur requise et doivent donc être remplacés lorsque l'emplacement des matériels qu'ils alimentent vient à être modifiée.
      / une seule goulotte ou chemin de câble étant généralement installée, la promiscuité de câbles électriques et de câbles ou cordons de transmission de données peut engendrer des dysfonctionnement des matériels informatiques qu'ils alimentent.

Le dispositif selon l'invention permet de remédier à l'ensemble de ces inconvénients. Il est composé, selon une première caractéristique, par des modules de fixation de différentes longueurs constitués d'une bande inférieure de textile auto-agrippant de type «crochets» sur lequel vient s'appliquer une bande supérieure de textile auto-agrippant de type « boucles » Les bandes inférieures de ces modules sont fixées à intervalles sur les surfaces ou l'on souhaite faire courir les câbles, par collage ou tout autre procédé de fixation. Les câbles à fixer sont positionnés sur la bande inférieure perpendiculairement ou en oblique par rapport à l'axe de la longueur de celle ci. La bande supérieure est ensuite rapportée sur la bande inférieure, la fixation des câbles étant assurée par l'adhérence des bandes supérieure et inférieure dans les intervalles laissés libres entre eux.

Selon les modes particuliers de réalisation:
- L' une des extrémités de la bande supérieure peut être fixée à l'une des extrémités de la bande inférieure par couture, collage, thermo-soudage ou tout autre procédé.
- L'extrémité libre de la bande supérieure peut être munie d'une languette afin de faciliter son désaccouplement de la bande inférieure.
- Afin de présenter une plus grande surface d'adhésion au support en cas de fixation par collage et une meilleure résistance à l'arrachement lors de désaccouplements répétés des bandes supérieure et inférieure:
   - La bande inférieure peut être plus large que la bande supérieure, de sorte que la force exercée pour désaccoupler les deux bandes soit inférieure à la force d'adhérence de la bande inférieure au support. Ce résultat est obtenu si la différence de largeur est supérieure à 30% et sans qu'il soit nécessaire qu'elle excède 50%, valeur au-delà de laquelle la force d'auto-agrippage des deux bandes devient insuffisante pour une fixation satisfaisante des objets.
   - Les bandes supérieure et inférieure peuvent être réunies par une deuxième fixation parallèle à la première et séparée d'elle par un espace ménageant entre elles une surface d'adhérence au support non soumise à la force d'arrachement lors du désaccouplement des deux bandes.
   - Dans le même but, la couture, collage, thermo soudure ou tout autre procédé réunissant les deux bandes, peut être écartée de l'extrémité de la bande inférieure d'une distance utilement comprise entre 5 et 10% de la longueur de celle-ci.
   - La largeur de la bande inférieure à son extrémité libre peut être augmentée afin de renforcer l'adhérence au support de cette partie du module.
   - La bande supérieure peut être plus longue que la bande inférieure afin de compenser le diamètre des câbles à fixer et permettre leur fixation, quel que soit leur nombre, sur la totalité de la longueur de la bande inférieure. Cette différence de longueur est utilement comprise entre 10 et 20 % de la longueur de la bande inférieure.
   - Des amorces de décollage risquant d'apparaître aux angles de la bande fixée au support, les angles vifs constituant toujours des points de plus faible résistance à l'arrachage, cette bande peut être arrondie à chacune de ses extrémités.
   - La bande inférieure peut être constituée de textile auto-agrippant de type « boucles » au lieu de « crochets », la bande supérieure étant alors constituée de textile auto-agrippant de type « crochets ».
   - Afin d'éviter une trop grande promiscuité des câbles électriques et des câbles de transmission de données informatiques fixés sur un même dispositif, promiscuité pouvant entraîner des interférences électromagnétiques, la solidarisation des deux bandes entre elles par couture, collage, thermo-soudage, ou tous autres procédés, peut être située au milieu du dispositif plutôt qu'à l'une de ses extrémités, de sorte à ménager deux zones de fixation nettement séparées, l'une recevant les câbles d'alimentation électrique et l'autre ceux de transmission de données
   - En fonction de la nature et des dimensions des supports sur lesquels ils auront à être apposés, et de la nature des câbles qui auront à y être fixés, les modules peuvent être de différentes dimensions. Pour répondre aux besoins tels qu'ils peuvent être identifiés à ce jour, ces dimensions peuvent être utilement, mais de manière non limitative:
      / longueurs : 5, 10, 15 et 30 cm
      / largeurs : 30, 50, 60 et 80 mm pour la bande inférieure, les largeurs des bandes supérieures correspondantes pouvant être inférieures de 30 à 50% et leurs longueurs supérieures de 10 à 20%.
   - La face non auto-agrippante de la bande inférieure peut être pré-enduite d'une colle de caractéristiques appropriées, protégée de l'air par une pellicule pelable, et permettre ainsi une fixation aisée sur le support dans le cas ou la fixation par collage est utilisée. Ce mode particulier de réalisation ne constitue cependant pas un élément essentiel de l'invention, une colle de type Hot Melt ou Néoprène pouvant tout aussi utilement être appliquée lors de la mise en oeuvre du dispositif.
   - Les modules peuvent se présenter sous forme d'une bande continue, chacun d'entre eux y étant délimité par deux séparations parallèles - couture, collage, thermo-soudure ou tout autre procédé - entre lesquelles a été réservé un espace suffisant pour en permettre la séparation par découpage.
Ces bandes peuvent se présenter en rouleaux logés dans un emballage carton faisant office de dévidoir, facilitant ainsi la mise en oeuvre des modules lors de leur fixation au support.

Les dessins annexés illustrent l'invention :

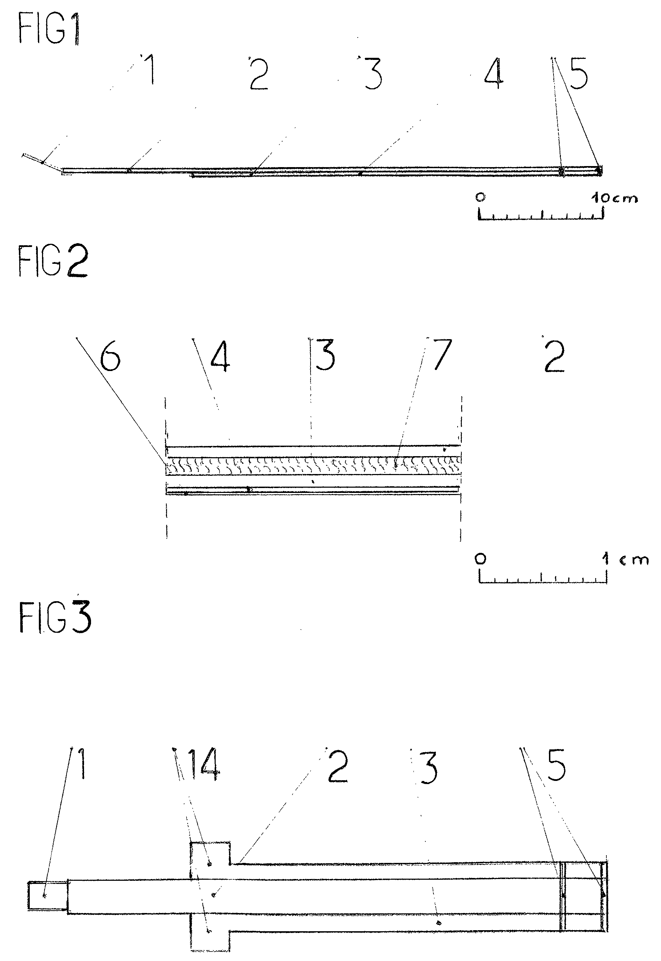

- La figure 1 représente, en coupe longitudinale, un module de fixation.
   Dans le cas illustré il s'agit d'un module de longueur 33 cm, de largeur 50 mm pour la bande inférieure et 28 mm pour la bande supérieure, soit une largeur égale à 56% de celle de la bande inférieure. La bande supérieure est d'une longueur de 15% supérieure à la bande inférieure à laquelle elle est fixée par une de ses extrémités. Son extrémité libre est munie d'une languette
- La figure 2 représente en coupe longitudinale, à plus grande échelle, un segment du module illustré figure 1
- La figure 3 représente le module illustré figure 1, à la même échelle mais en élévation.
- La figure 4 illustre, en élévation, un exemple de fixation de câbles sur le module représenté figure 3.
- La figure 5 illustre, en coupe longitudinale, la possibilité de fixation d'un module tel que représenté figure 1, ou de toutes autres dimensions, sur une surface non plane.
- La figure 6 représente un module de mêmes dimensions et à la même échelle que celui illustré figure 3 mais dont les extrémités de la bande inférieure sont arrondies et dont la fixation des deux bandes a été positionnée à une distance de l'extrémité de la bande inférieure égale à 10% de la longueur de cette dernière.
- La figure 7 représente un module, toujours de mêmes dimensions que celui illustré figure 3, mais dont les deux bandes sont réunies entre elles par leur milieu et non à leur extrémité ou à un emplacement proche de leur extrémité.
- La figure 8 illustre un exemple de fixation nettement séparée des câbles électriques, téléphoniques et de données informatiques sur un module tel que représenté figure 7.

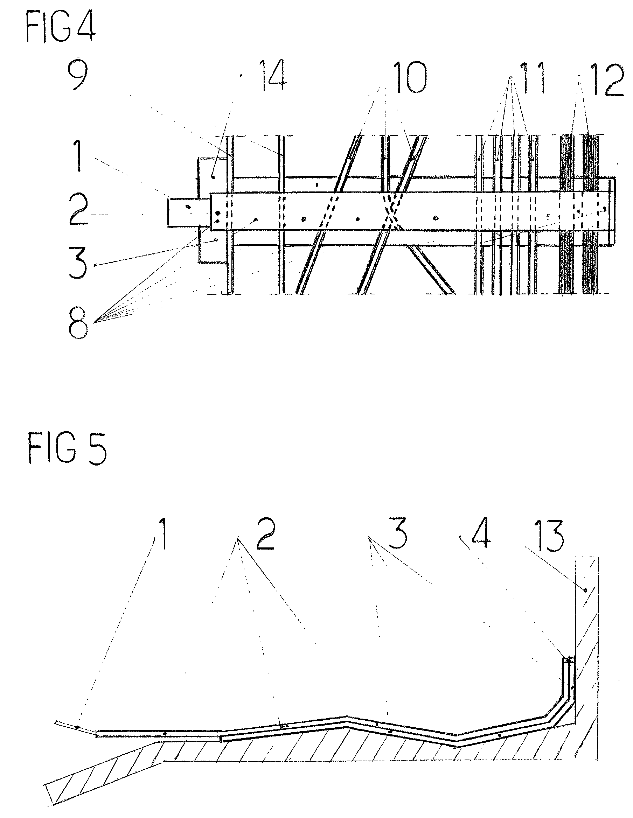

En référence à ces dessins, le dispositif comporte, selon un premier mode réalisation (figures 1 à 5) des modules de fixation comportant une bande auto-agrippante inférieure (3), pré enduite d'une couche de colle (4) protégée de l'air par une pellicule (6) destinée à être ôtée au moment de l'application sur le support. Une bande supérieure de textile auto-agrippant (2) de propriétés complémentaires vient s'appliquer sur la bande inférieure.
- Les deux bandes sont réunies l'une à l'autre par l'une de leurs extrémités (5).
   Cette fixation peut être réalisée par couture, collage, thermo-soudure ou tous autres procédés.
- La bande inférieure (3) est d'une largeur supérieure de 30 à 50% à celle de la bande supérieure (2) afin de renforcer son adhérence au support et sa résistance à l'arrachement lors de désaccouplements répétés des deux bandes. Dans le même but son extrémité libre est élargie (14) et les deux bandes (2) et (3) sont réunies par une double fixation (5).
- L'extrémité libre de la bande supérieure (2) est munie d'une languette (1) afin de faciliter son désaccouplement de la bande inférieure (3).
- La bande supérieure (2) est 10% plus longue que la bande inférieure (3) afin de compenser le diamètre des câbles à fixer sur le module. La figure 4 illustre l'utilité de cette disposition lors de la fixation de plusieurs câbles ou objets sur le même module.

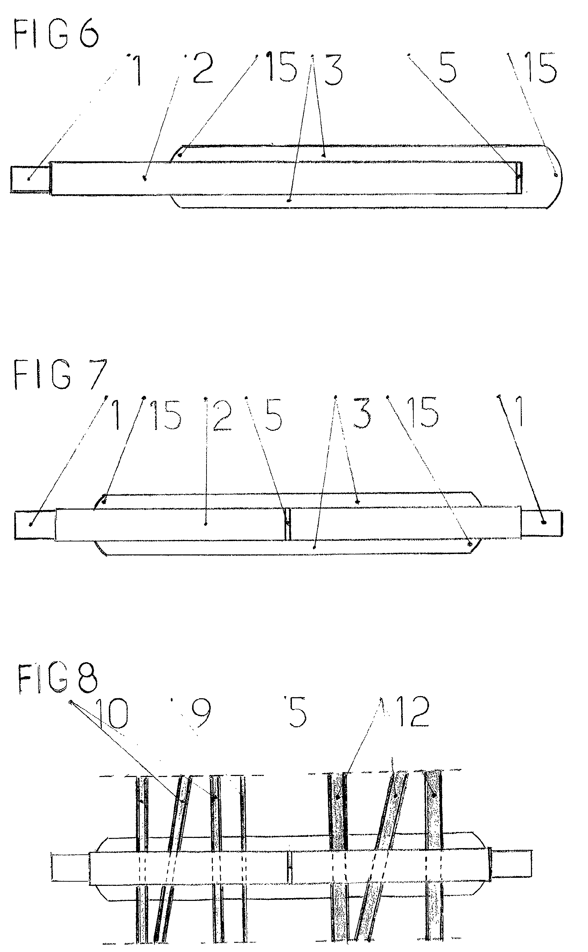

Selon un second mode de réalisation (figure 6):
- La durabilité de l'adhérence au support est utilement améliorée par la découpe en arrondi (15) des deux extrémités de la bande inférieure. Cette découpe élimine les angles vifs qui constituent des zones de plus faible résistance à l'arrachement et ou peuvent apparaître rapidement des amorces de décollage en cas de désaccouplement répétés des deux bandes. Selon ce mode de réalisation, l'élargissement de l'extrémité libre de la bande inférieure tel que décrit dans le premier mode de réalisation n'est plus nécessaire.
- La fixation des deux bandes entre elles est réalisée par une seule couture, soudure, thermo-collage ou tous autres procédés, (5) située à faible distance de l'extrémité de la bande inférieure. Cette disposition a pour effet de ménager une zone d'adhérence non soumise à la force d'arrachement lors du désaccouplement des deux bandes, entre l'extrémité du module et la fixation, et de renforcer l'adhérence du dispositif à son support sans qu'il soit nécessaire de recourir à deux fixations séparées ainsi que décrit dans le premier mode de réalisation, ce qui dans le cas d'une découpe arrondie ne permettant pas le positionnement de la première fixation directement en bordure de la bande inférieure, aurait pour effet de réduire excessivement la partie de cette bande demeurant disponible pour la fixation des câbles ou objets. L'effet de renforcement est utilement obtenu si la fixation est positionnée à une distance de l'extrémité de la bande inférieure supérieure à 8% de la longueur de celle-ci, sans qu'il soit nécessaire, même pour les formats de faibles dimensions, d'excéder 18% de cette longueur.

Selon un troisième mode de réalisation (figures 7 et 8) :
- Les deux bandes sont réunies l'une à l'autre par leur milieu (5) et non par l'une de leurs extrémités ou à un emplacement proche de l'extrémité de la bande inférieure, les deux extrémités de celle-ci présentant une découpe arrondie et les moyens de fixation l'une à l'autre des deux bandes demeurant les mêmes que dans les deux premiers modes de réalisation. Cette disposition permet de séparer nettement deux zones distinctes de fixation des câbles ou objets sur le module, l'une recevant les câbles téléphoniques (9) et électriques (10) et l'autre les câbles de transmission de données informatiques (12) qui se trouvent ainsi suffisamment séparés des premiers pour éviter tous risques d'interférences électromagnétiques susceptibles de perturber la transmissions des données informatiques. Les zones de la bande inférieure située de part et d'autres de la fixation (5) présentent une surface assez importante pour que leur adhérence au support soit largement suffisante pour résister à la force d'arrachement en cas de désaccouplements répétés des deux bandes, sans qu'il soit nécessaire de la renforcer en ayant recourt à une deuxième fixation, tel qu'il est décrit dans le premier mode de réalisation.

Quel que soit le mode de réalisation :
- Les câbles ou objets à fixer (9), (10), (11) (12) sont disposés entre les deux bandes (2) et (3). Leur fixation est assurée par l'auto-agrippage (7) des bandes (2) et (3), par l'exercice d'une pression dans les espaces (8) laissés libres entre les passages des câbles.
- Les câbles ou objets à fixer peuvent être de sections et de diamètres différents, tels que câbles téléphoniques (9), électriques (10), ou informatiques (12).
- Ils peuvent être fixés au module soit perpendiculairement (9), (11) et (12), soit obliquement (10) par rapport à l'axe du module, autorisant ainsi la fixation sur le même module de câbles suivant des cheminements différents.
- Le mode de fixation permet le changement de direction du parcours des câbles ou leur croisement au niveau du dispositif lui-même (10), ainsi que la fixation de câbles plusieurs fois repliés sur eux mêmes (11) pour compenser un excès de leur longueur entre leurs raccords aux réseaux fixes et les matériels à alimenter.
- Le mode de fixation permet de modifier aisément le nombre ou la disposition des câbles disposés sur un même module
- Constitués de bandes textiles, les modules présentent une plasticité permettant de les fixer efficacement même sur un support non plan (13) et présentant des angles vifs.

Le dispositif selon l'invention est particulièrement adapté à la fixation définitive ou provisoire de câbles d'alimentation en électricité basse tension, de câbles téléphoniques et de transmission de données informatiques aux parois de locaux ou aux meubles de bureaux, entre les réseaux fixes et les machines et matériels de bureau qu'ils alimentent, ainsi qu'à la modification aisée du parcours de ces câbles lorsque celle ci s'avère nécessaire.

## Revendications

1. Dispositif de fixation multidirectionnelle d'un ou plusieurs câbles d'alimentation électrique en basse tension, câbles téléphoniques, câbles de transmission de données informatiques et de tous objets longiformes à un support, **caractérisé en ce qu'**il est composé uniquement de 2 bandes continues de textiles auto agrippants de caractéristiques complémentaires, de longueurs et de largeurs adaptés à la nature et aux dimensions des câbles et objets à fixer, l'une de ces bandes venant se fixer par collage ou tous autres procédés sur le support, et l'autre, qui lui est elle est solidarisée par l'une de ses extrémités par couture, collage, thermo-soudage, ou tous autres procédés, venant s'appliquer sur la première, le ou les câbles et objets à fixer étant insérés entre les deux bandes.

2. Dispositif selon la revendication 1 **caractérisé en ce que** les deux bandes sont solidarisées par deux fixations distinctes et séparées l'une de l'autre par un espace.

3. Dispositif selon l'une quelconque des revendications précédentes **caractérisé en ce que** la bande non fixée au support est d'une largeur inférieure de trente à cinquante pour cent à celle de la bande à fixer au support.

4. Dispositif selon l'une quelconque des revendications précédentes **caractérisé en ce que** la bande non fixée au support est d'une longueur supérieure de dix à vingt pour cent à celle de la bande à fixer au support.

5. Dispositif selon l'une quelconque des revendications précédentes **caractérisé en ce que** la bande non fixée au support est munie d'une languette à son extrémité libre.

6. Dispositif selon l'une quelconque des revendications précédentes **caractérisé en ce que** l'extrémité libre de la bande à fixer au support présente un élargissement latéral sur chacun de ses cotés.

7. Dispositif selon l'une quelconque des revendications précédentes **caractérisé en ce que** les deux bandes sont réunies entre elles par une fixation située à l'une de leurs extrémités.

8. Dispositif selon l'une quelconque des revendications 1, 2, 3, 4, 5 ou 6 **caractérisé en ce que** l'extrémité de la bande non fixée au support est réunies à la bande à fixer au support par une fixation située à une distance de l'extrémité de cette dernière comprise entre huit et dix huit pour cent de sa longueur.

9. Dispositif selon l'une quelconque des revendications 2, 3, 4 ou 5 **caractérisé en ce que** les deux bandes sont solidarisées par une fixation située en leur milieu.

10. Dispositif selon l'une quelconque des revendications 1, 2, 3, 4, 5, 7, 8 ou 9 **caractérisé en ce que** les deux extrémités de la bande à fixer au support sont arrondies.
